# EUROPEAN PATENT SPECIFICATION

(11) **EP 0 915 803 B1**
(45) Date of publication and mention of the grant of the patent: **15.11.2000**
(21) Application number: 97934789.5
(22) Date of filing: 31.07.1997
(51) Int. Cl.: B64F 5/00

(54) **A DEVICE FOR TREATING THE OUTER SIDE OF AIRCRAFTS**
EINRICHTUNG ZUR BEHANDLUNG DER AUSSENSEITE EINES FLUGZEUG
DISPOSITIF SERVANT A TRAITER LE COTE EXTERIEUR D'AVIONS

(30) Priority: 01.08.1996 NL 1003720
(43) Date of publication of application: 19.05.1999
(73) Proprietor: Maatschappij voor Beheer en Innovatie Prins B.V., 2042 NN Zandvoort (NL)
(72) Inventor: PRINS, Willem, Frederik, NL-2042 NN Zandvoort (NL)
(74) Representative: Boelsma, Gerben Harm, Ir.
(86) International application number: NL9700450
(87) International publication number: WO9805554

(56) References cited:
- EP-A- 0 390 296
- US-A- 5 104 068

## Description

The invention relates to a device as defined in the first part of claim 1.

Such a device is known from document EP-A-0390296.

This well-known device is more particularly designed for cleaning the wings, the body and the tail portion of an aircraft.

The means for dispensing the treatment liquid - in this case washing liquid - are formed by brushes to be supplied with the washing liquid, said brushes being mounted for movement along the longitudinal support of each gantry and for adjustment in the vertical direction.

A problem with respect to the surface treatment of aircrafts, for which no satisfactory solution was found as yet, concerns the de-icing and anti-icing treatment of large portions of the aircraft, including movable parts, such as the flaps, as well as the stabilo and the tail portion of the aircraft.

Such a de-icing treatment has to be carried out - in freezing weather - immediately preceding the take-off of the aircraft.

The usual procedure comprises the use of a truck of the tower waggon type, provided with a tank containing glycol, a pump and a spraying lance, said vehicle being driven to the aircraft so as to carry out the de-icing treatment, after which the aircraft can ride to the runway.

In practice a number of such trucks is used for service at changing locations spread over the platform area of the airport. There is a growing opposition against this procedure due to the inherent environmental contamination which goes far beyond allowable limits and is caused by the de-icing liquid that drips off the surfaces treated by the spraying lance and is often used in excess.

Moreover, the well-known trucks can only carry a limited amount of treating liquid, so that frequent and time consuming replenishing of the liquid supply is necessary.

The invention aims at improving a device of the type defined hereinabove and making it suitable for de-icing aircrafts in a manner that saves the environment to a considerable extent and requires a much shorter time for treatment.

According to the invention this aim is achieved in that the means for dispensing treatment fluid is formed by at least one spraying tube extending longitudinally of the longitudinal support, said tube being equipped with longitudinally spaced spraying nozzles, that cooperate with independently controllable valves.

The device according to the invention is particularly useful for placement at the taxi route towards the runway. During a short period of standstill of the aircraft the two carriages are moved from a spaced position transversely towards the aircraft while quickly and effectively spraying the aircraft with de-icing liquid, at the front side across the wings and at the rear side across the stabilo and the tail planes.

The valves cooperating with the individual (groups of) spraying nozzles can be simply controlled in such a manner, that each time only that (group of) spraying nozzles of the spraying tube is opened, that is actually located above the surface to be de-iced, a certain minimum reference marging being considered at the front and rear edges of the surface to be treated, if desired.

In particular computer-controlled valves may be envisaged, making use of a control program that is representative of the type of aircraft to be treated.

The manner of de-icing by means of a spraying tube with controlled valves is, as such, a considerable improvement as compared with the de-icing procedure through a spraying lance, in the sense, that the de-icing liquid can be better and more effectively metered, whereas the required total amount of de-icing liquid and thus also the amount of liquid running into the environment can be substantially reduced.

Due to the fixed site of the device according to the invention it will be easy to take measures for collecting draining and dripping liquid and thereby reduce environmental contamination to a minimum.

As the device may be continuously supplied from a stationary storage tank containing de-icing liquid through a flexible hose connection, the time consuming back and forth travelling of the well-known de-icing trucks with the inherent danger for traffic congestion no longer exists. The aircrafts can be treated quicker one after the other.

The period of time during which the aircraft is stationary is utilized for the greater part as effective spraying time.

By placing the device at the entrance route towards a runway which allows the de-icing treatment to be postponed until shortly before take-off, the risk is avoided, that the liquid has become already rather inactive before the take-off is actually taking place. The latter frequently occurs in case of the usual procedure above referred to, especially on the bigger airports.

It is to be noted that document US 5 104 068 discloses an apparatus which is designed for de-icing and anti-icing of an aircraft. The apparatus comprises a set of two spraying tubes directed at right angles to the longitudinal axes of the aircraft to be treated and extending cantilever-like from fixed posts on either side of the aircraft to be treated. The de-icing or anti-icing treatment is carried out while the aircraft is towed between the posts and under the spraying tubes.

Further features of the invention will be hereinafter further explained by way of example with reference to the drawing.
Fig. 1 is a diagrammatic front view of one of the two gantries of the device according to the invention, showing the gantry in its innermost position relative to the larboard side of the body of an aircraft to be treated and
Fig. 2 is a perspective view, in which also only one of the two gantries, namely that on the larboard side of the aircraft to be treated, is shown.

The device according to the invention comprises two carriages in the form of gantries 1 with wheels 2, disposed on either side of a parking guideline, one of which gantries being shown in the drawing. These gantries each comprise two frames 5 supported on wheels 2 and a longitudinal beam 4 extending over the same. The longitudinal beam 4 projects with its ends through a certain distance beyond the frames 5 and in the example shown in the drawing it is at a fixed level over that of the wing surfaces to be treated.

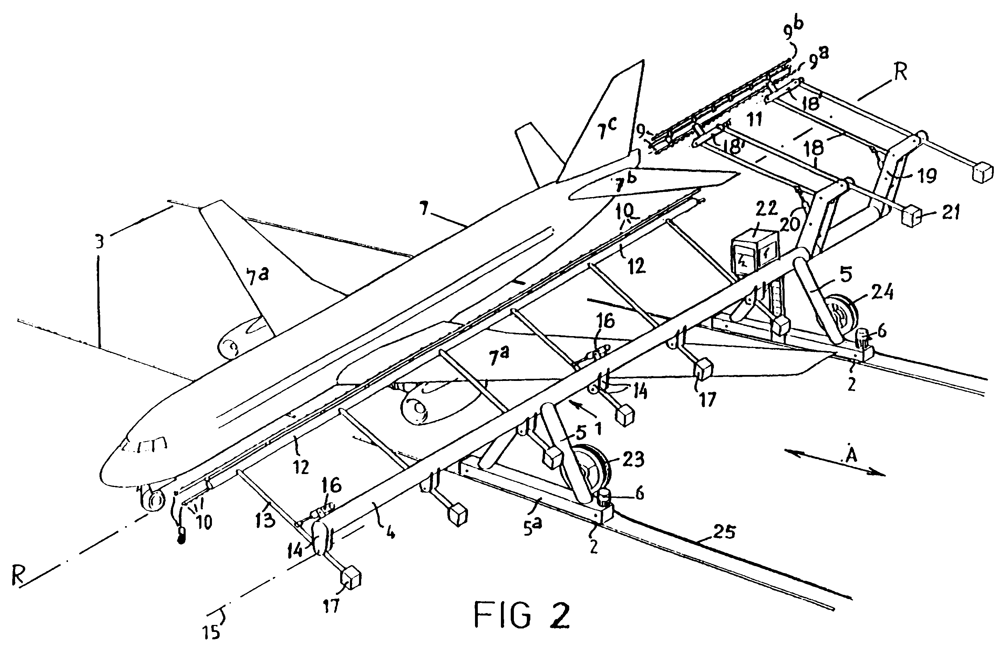

On the base portions 5a of the frames 5 of each gantry 1 drive motors 6 are provided for moving the respective gantry in the arrow direction A (see Fig. 2).

Guiderails 3 may be provided for the wheels 2 on an area of an airport platform that is adapted for stationing an aircraft to be de-iced thereon. The drawings shows such an aircraft 7, which has been manoeuvred, e.g. with the aid of signs such as route lines provided on the ground, into the right position (according parking guideline R) for a treatment.

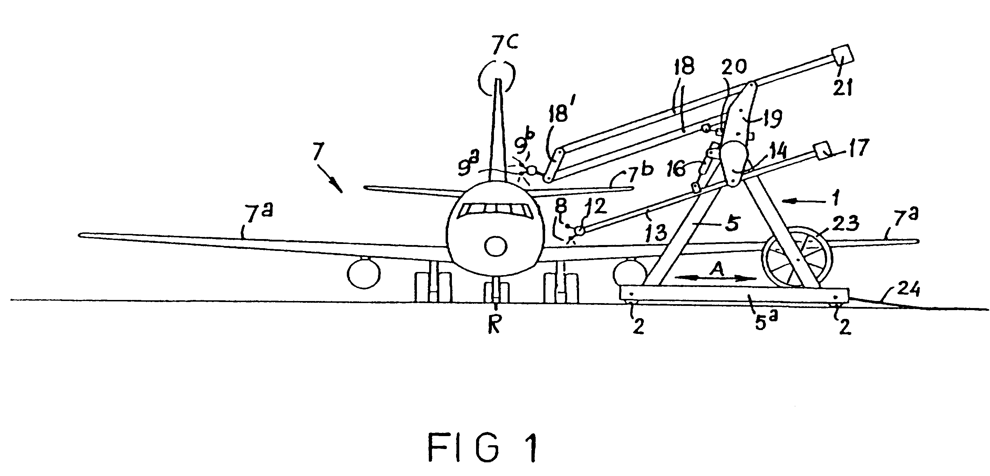

The two gantries 1 can be spaced apart over the rails 3 to an extent that allows the aircraft with its wings to pass between the opposite gantries (Fig. 1). In the de-icing position the two gantries 1 are positioned (substantially) symmetrically relative to the parking guideline (R).

The tools for the de-icing are formed by two types of spraying tubes which are adapted, in principle, for treating the wings and the tail portion respectively.

The spraying tubes for the wings are indicated at 8, while those for the tail portion are designated at 9.

The spraying tubes 8 and 9 are provided with a series of spraying nozzles 10 and 11 respectively, which are spaced along the spraying tubes and cooperate with valves (not shown), e.g. solenoid valves, which are controllable (in groups, if desired) independently from one another.

In the example shown in the drawing each gantry is provided with two spraying tubes 8 for treatment of the wings, the spraying nozzles 10 of said spraying tubes having slightly differing spraying directions.

The two spraying tubes 8 are connected, through a support tube 12, to the free ends of a plurality of support arms 13, which extend in planes at right angles to the longitudinal direction of the longitudinal beam 4 and are mounted to said longitudinal beam, between lugs 14, for a pivoting movement in said planes about a common horizontal axis 14. The elevation angle of the support arms 13 and thereby the height of the spraying tubes 8 above ground level is adjustable or controllable by means of a number of piston cylinder devices, e.g. hydraulic cylinders 16, which are connected to the respective support arms on one hand and to the longitudinal beam 4 on the other hand. At the ends of the support arms 13 that are turned away from the spraying nozzles 8, counterweights 17 are provided to reduce the load that is applied to the hydraulic cylinders 16.

The two support arms 18 carrying the spraying tubes 9 for the tail portion of the aircraft are in the form of a parallelogram linkage system, the two fixed pivots of which are provided on a support arm 19 that extends from the longitudinal beam 4 upwardly. The spraying tubes 9 are fixedly connected to the links 18' of said parallelogram linkage system which are located at the free ends of the two support arms 18 so that the spraying tubes will not rotate about the respective axes when the support arms 18 are moving upwards or downwards and consequently the spraying direction of the respective spraying nozzles will not change. The latter is important, because the support arms 18 have to make a rather large stroke for treating both the horizontal and vertical surfaces of the tail portion of the aircraft. In the example shown in the drawing there are two tubes 9, which are each provided with a series of longitudinally spaced spraying nozzles. One of said spraying tubes, by means of which the horizontal surfaces have to be de-iced, has the spraying direction of the spraying nozzles substantially vertically downwards, whereas that of the spraying nozzles of the second spraying tube, serving for the treatment of the vertical surfaces, is substantially horizontally turned away from the respective gantry 1.

The elevation angle of the two support arms 18 and thereby the height of the spraying tubes 9 above ground level is adjustable and controllable by means of hydraulic cylinders indicated at 20. To reduce the load on these cylinders both of the support arms 18 are provided with a counterweight 21 provided on an extension of the upper link of the respective parallelogram linkage system.

The steering of the two gantries may occur from a cabin 22 mounted on the longitudinal beam 4.

The required energy may e.g. be supplied by means of a cable 25, which can be wound on and unwound from a reel 23 mounted on one of the side frames 5.

As an example of the manner of supplying the required de-icing liquid a reel 24 is provided on the other side frame 5 for winding and unwinding a supply hose for the treating liquid. The connection between the reel 24 and the spraying tubes 8 and 9 has not been shown.

The operation of the above described device is as follows.

After the aircraft 7 to be treated has come to a standstill between the sufficiently spread gantries 1 the device is put into operation to cause the gantries 1 to move towards one another in the arrow direction A. At first the gantries 1 are moving with the respective longitudinal beams 4 passing across the wings 7a, while keeping the (lower ones of the) spraying tubes 8 at the required level above the wing surface 7a, e.g. through sensors provided on the support tube 12 which control the hydraulic cylinders 16.

It will be understood, that the inward movement of a gantry brings a varying series of spraying nozzles 10 of the spraying tube 8 straight above the wing surface 7a. As mentioned before, a computer aided control, making use of a program that contains data relating to both the shape and the dimensions of the wing to be treated, enables to achieve in a simple manner, that each time only those spraying nozzles are opened by the respective (solenoid) valves for delivering de-icing liquid, which are actually positioned directly above the wing surface to be treated.

As soon as the treatment of the wings has progressed to the extent, that the spraying nozzles 9a for the tail portion have reached the lying tail surfaces 7b, the control of the spraying nozzles 11 of the spraying tube 9a is started in a manner which is similar to what has been described above with respect to the wing surfaces 7a. The spraying tubes 9a are kept at a suitable level above the tail surface 7b to be treated, e.g. through sensors which control the hydraulic cylinders 20.

At the completion of the treatment of the lying surfaces 7a and 7b the gantries 1 are brought to a standstill and the support arms 18 are swung upwardly by the hydraulic cylinders 20 for treating the vertical surfaces 7c of the tail portion of the aircraft. The treatment of the surfaces 7c is effected by the spraying nozzles of the upper spraying tube 9b. These spraying nozzles are also controlled in such a way, that each time only those spraying nozzles are opened by the respective valves, which are positioned directly opposite the surface 7c. After the vertical tail surfaces 7c having also been treated the gantries 1 return, automatically if desired, to the spread starting position which allows the aircraft to drive off towards the runway. Based on calculations, the de-icing process can be carried out within 60 sec., starting from the moment, that the aircraft has come to a standstill, until the moment, that the treated aircraft is allowed to drive off.

The device shown in the drawing is particularly suitable for treating so-called "narrow bodies", with which in professional circles all those aircrafts are meant, which in the passenger transportation version comprise no more than two rows of passenger's seats. Aircrafts of the "narrow body" type, which account for roughly 80% of the world's air traffic, have in common, that there is little difference in height of the wings in the parked position. The differences mainly relate to the wing-span and to the body length, the latter manifesting itself in difference in spacing between the base of the wing at the body and the tail portion. These differences however may be easily covered by the above device. For this purpose, more particilarly, the spraying tubes 8 adapted to treat the wing surfaces, have an adequate length.

As shown in the Fig. 2, the supporting beam 2 provided with the spraying nozzles 8 extends substantially from the cockpit end until the beginning of the tail portion.

The device shown in the drawing has the advantage, that it also enables the body to be treated therewith, and more particularly as a pre-treatment (called "anti-icing"), which is usually carried out during night time.

Finally it should be remarked, that especially the spray tube assembly serving for the treatment of the tail portion enables to effectively treat additional tail surfaces, if any, that are at a higher level than the surfaces 7b.

## Claims

1. A device for treating the exterior of an aircraft (7) comprising a pair of gantries (1) disposed on either side of an aircraft parking guide line (R) on an aircraft parking place, said gantries (1) having each an elongate support beam (4) positioned above aircraft wing level and extending substantially parallel to said parking guide line (R), and said gantries (1) being placed to be moved, from a position in which the gantries are spread apart to an extent corresponding to the wing span of an aircraft, towards one another in a direction transversely to said parking guide line and with said support beams (4) passing over the wings of an aircraft to be treated, said support beam (4) carrying means (8; 9) for dispensing treatment fluid, characterized in that said treatment fluid dispensing means is constituted by at least one spraying tube (8; 9), that extends longitudinally of said elongated support beam (4), said tube (8; 9) being provided with longitudinally spaced spraying nozzles (10; 11), which cooperate with independently controllable valves.

2. A device according to claim 1, characterized in that separate spraying tubes (8; 9) are provided for the wings and for the tail portion of an aircraft to be treated.

3. A device according to claim 1-2, characterized in that said spraying tubes (8; 9) are connected to the free ends of supporting arms (13; 18), which extend from said elongate support beam (4) inwardly and transversely to said parking guideline (R).

4. A device according to claim 3, characterized in that the support arms (13; 18) are pivotally and adjustably connected about longitudinal axes to said support beams (4).

5. A device according to claim 4, characterized in that the pivot axes of the supporting arms (18) for the spraying tubes (9) for the aircraft tail portion are positioned at a distance above the support beam (4), whereas the supporting arms (13) for the spraying tubes (8) for the aircraft wings are positioned at a certain distance under said support beam (4).

6. A device according to claim 4, characterized in that the height of the spraying tubes (8; 9) is adjustable by means of inclination-adjusting devices (16; 20), such as piston cylinder devices, which connect to the respective supporting arms (13; 18) and to the support beam (4) respectively.

7. A device according to claim 6, characterized in that the arms (13; 18) are provided with counterweights (17; 21).

8. A device according to claims 3-7, characterized in that at least the supporting arms (18) for the spraying tubes (9) for the aircraft tail portion are in the form of a parallelogram linkage system, of which the links (18') positioned at the free arm ends are carrying the spraying tubes (9).

9. A device according to claim 8, characterized in that the spraying tubes (9) for the aircraft tail portion comprise two series of spraying nozzles (9a; 9b), the spraying directions of which are turned substantially downwardly and horizontally respectively.

## Patentansprüche

1. Einrichtung zur Behandlung der Außenseite eines Flugzeugs (7), die ein Paar Gestelle (1) umfaßt, die jeweils auf einer Seite einer Führungslinie (R) zum Flugzeugparken auf einem Flugzeugabstellplatz angeordnet sind, wobei jedes der Gestelle (1) einen länglichen Tragbalken (4) umfaßt, der oberhalb des Niveaus der Flügel des Flugzeugs angeordnet ist und sich im wesentlichen parallel zu der Führungslinie (R) zum Parken erstreckt, und wobei die Gestelle (1) so angeordnet sind, daß sie aus einer Position, in der die Gestelle bis zu einer Stellung, die der Flügelspannweite eines Flugzeugs entspricht, auseinandergebreitet sind, zueinander in einer Richtung quer zu der Führungslinie zum Parken geschwenkt werden können, und wobei die Tragbalken (4) oberhalb der Flügel eines zu behandelnden Flugzeugs verlaufen, wobei der Tragarm (4) ein Mittel (8; 9) zum Ausgeben einer Behandlungsflüssigkeit trägt, dadurch gekennzeichnet, daß das Flüssigkeitsausgabemittel durch wenigstens ein Sprührohr (8; 9) gebildet ist, das sich in Längsrichtung des länglichen Tragbalkens (4) erstreckt, wobei das Rohr (8; 9) mit in Längsrichtung beabstandeten Sprühdüsen (10; 11) ausgestattet ist, die mit unabhängig kontrollierbaren Ventilen zusammenwirken.

2. Einrichtung nach Anspruch 1, dadurch gekennzeichnet, daß für die Flügel und für den Heckteil eines zu behandelnden Flugzeugs getrennte Sprührohre (8; 9) vorgesehen sind.

3. Einrichtung nach Anspruch 1-2, dadurch gekennzeichnet, daß die Sprührohre (8; 9) mit den freien Enden der Tragarme (13; 18) verbunden sind, die sich von dem länglichen Tragbalken (4) einwärts und quer zu der Führungslinie (R) zum Parken erstrecken.

4. Einrichtung nach Anspruch 3, dadurch gekennzeichnet, daß die Tragarme (13; 18) um longitudinale Achsen schwenkbar und einstellbar mit den Tragbalken (4) verbunden sind.

5. Einrichtung nach Anspruch 4, dadurch gekennzeichnet, daß die Schwenkachsen der Tragarme (18) für die Sprührohre (9) für den Heckteil des Flugzeugs in einem Abstand über dem Tragbalken (4) angeordnet sind, wogegen die Tragarme (13) für die Sprührohre (8) für die Flugzeugflügel in einem bestimmten Abstand unter dem Tragbalken (4) angeordnet sind.

6. Einrichtung nach Anspruch 4, dadurch gekennzeichnet, daß die Höhe der Sprührohre (8; 9) mittels Winkeleinstellvorrichtungen (16; 20) wie Kolbenzylindervorrichtungen, die mit den jeweiligen Tragarmen (13; 18) und dem jeweiligen Tragbalken (4) verbunden sind, einstellbar ist.

7. Einrichtung nach Anspruch 6, dadurch gekennzeichnet, daß die Arme (13; 18) mit Gegengewichten (17; 21) versehen sind.

8. Einrichtung nach den Ansprüchen 3-7, dadurch gekennzeichnet, daß wenigstens die Tragarme (18) für die Sprührohre (9) für den Heckteil des Flugzeugs in Form eines Parallelogramm-Verbindungssystems sind, von dem die an den freien Armenden angeordneten Verbindungen (18') die Sprührohre (9) tragen.

9. Vorrichtung nach Anspruch 8, dadurch gekennzeichnet, daß die Sprührohre (9) für den Heckteil des Flugzeugs zwei Reihen von Sprühdüsen (9a; 9b) umfassen, deren Sprührichtungen jeweils im wesentlichen abwärts und aufwärts gerichtet sind.

## Revendications

1. Dispositif pour traiter l'extérieur d'un aéronef (7) comportant une paire de porte-à-faux (1) disposés de part et d'autre d'une ligne (R) de guidage de parking d'aéronef sur une place de parking d'aéronef, les porte-à-faux (1) ayant chacun une poutre (4) de support oblongue positionnée au-dessus du niveau des ailes de l'aéronef et s'étendant sensiblement parallèlement à la ligne (R) de guidage de parking, et les porte-à-faux (1) étant placés pour être déplacés, à partir d'une position dans laquelle les porte-à-faux sont écartés dans une mesure qui correspond à l'extension d'ailes d'un aéronef, en direction l'une de l'autre suivant une direction transversale à la ligne de guidage de parking et en ayant les poutres (4) de support qui passent au-dessus des ailes d'un aéronef à traiter, les poutres (4) de support portant des moyens (8; 9) destinés à dispenser un fluide de traitement, caractérisé en ce que les moyens de dispensation de fluide de traitement sont constitués d'au moins un tube (8; 9) de pulvérisation qui s'étend longitudinalement à la poutre (4) de support oblongue, le tube (8; 9) étant muni de buses (10; 11) de pulvérisation à distance les unes des autres longitudinalement, les buses coopérant avec des vannes pouvant être commandées de manière indépendante.

2. Dispositif suivant la revendication 1, caractérisé en ce que des tubes (8; 9) de pulvérisation distincts sont prévus pour les ailes et pour la partie de queue d'un aéronef à traiter.

3. Dispositif suivant la revendication 1 ou 2, caractérisé en ce que les tubes (8; 9) de pulvérisation sont reliés aux extrémités libres de bras (13; 18) de support qui s'étendent à partir de la poutre (4) de support oblongue vers l'intérieur et transversalement à la ligne (R) de guidage de parking.

4. Dispositif suivant la revendication 3, caractérisé en ce que les bras (13; 18) de support sont reliés de manière ajustable et articulée par rapport à des axes longitudinaux aux poutres (4) de support.

5. Dispositif suivant la revendication 4, caractérisé en ce que les axes de pivot des bras (18) de support pour les tubes (9) de pulvérisation pour la partie de queue de l'aéronef sont positionnés à une distance au-dessus de la poutre (4) de support, tandis que les bras (13) de support pour les tubes (8) de pulvérisation pour les ailes d'aéronef sont positionnés à une certaine distance sous la poutre (4) de support.

6. Dispositif suivant la revendication 4, caractérisé en ce que la hauteur des tubes (8; 9) de pulvérisation peut être ajustée au moyen de dispositifs (16; 20) à ajustement d'inclinaison, tels que des dispositifs à cylindre à piston, qui se connectent aux bras (13; 18) de support respectifs et à la poutre (4) de support respectivement.

7. Dispositif suivant la revendication 6, caractérisé en ce que les bras (13; 18) sont munis de contrepoids (17; 21).

8. Dispositif suivant l'une quelconque des revendications 3 à 7, caractérisé en ce qu'au moins les bras (18) de support pour les tubes (9) de pulvérisation pour la partie de queue d'aéronef sont sous la forme d'un système d'articulation à parallélogramme, les articulations (18') du système positionnées aux extrémités de bras libre portant les tubes (9) de pulvérisation.

9. Dispositif suivant la revendication 8, caractérisé en ce que les tubes (9) de pulvérisation pour la partie de queue d'aéronef comportent deux séries de buses (9a; 9b) de pulvérisation, dont les directions de pulvérisation sont tournées sensiblement vers le bas et horizontalement respectivement.
